# EUROPEAN PATENT SPECIFICATION

(11) **EP 4 400 996 B1**
(45) Date of publication and mention of the grant of the patent: **04.03.2026**
(21) Application number: 23151133.8
(22) Date of filing: 11.01.2023
(51) Int. Cl.: G06F 21/62, G05D 1/00

(54) **AUTONOMOUS DRIVING APPARATUS AND METHOD AT RESTRICTED MOTARABLE SPACE**
AUTONOME FAHRVORRICHTUNG UND VERFAHREN IN EINGESCHRÄNKTEM FAHRRAUM
APPAREIL ET PROCÉDÉ DE CONDUITE AUTONOME DANS UN ESPACE MOBILE LIMITÉ

(43) Date of publication of application: 17.07.2024
(73) Proprietor: Hyundai Mobis Co., Ltd., Gangnam-gu Seoul 06141 (KR)
(72) Inventor: CHANDRASEKARAN, Pradeep, 65760 Eschborn (DE)
(74) Representative: Frenkel, Matthias Alexander

(56) References cited:
- WO-A1-2018/111360
- WO-A1-2022/106894
- US-A1- 2018 189 516
- US-A1- 2019 384 320
- US-A1- 2021 109 538
- US-A1- 2021 258 719

## Description

### BACKGROUND

### FIELD

Exemplary embodiments of the present disclosure relate to an autonomous driving apparatus and method applied to an autonomous vehicle.

### DISCUSSION OF THE BACKGROUND

An autonomous vehicle refers to a vehicle that autonomously determines a driving route by perceiving the surrounding environment and driving situation through external information sensing and processing functions while driving, and travels independently using its own power.

The autonomous vehicle may travel to a destination by itself while substantially preventing collisions with obstacles on a driving route and adjusting a vehicle speed and a driving direction according to the shape of a road even when a driver does not operate a steering wheel, an accelerator pedal, a brake, or the like. For example, the autonomous vehicle may accelerate on a straight road and decelerate while changing a driving direction according to a road curvature on a curved road.

In order to ensure stable driving of the autonomous vehicle, a driving environment needs to be accurately measured through each sensor mounted on the vehicle, and driving needs to be controlled according to the driving environment measured by continuously monitoring the driving condition of the vehicle. To this end, various sensors, such as a Lidar sensor, a radar sensor, an ultrasonic sensor, and a camera sensor, are applied to the autonomous vehicle as sensors for detecting surrounding objects such as surrounding vehicles, pedestrians, and fixed facilities. Data outputted from these sensors are used to determine information on the driving environment, for example, state information such as the positions, shapes, movement directions, and movement speeds of the surrounding objects.

Moreover, the autonomous vehicle optimally determines a driving route and a driving lane by determining and correcting the position of the vehicle by using map data stored in advance, controls the driving of the vehicle so as not to deviate from the determined route and lane, and also provides a function of performing defense and avoidance driving against a vehicle that suddenly enters from the vicinity or a risk factor existing on the driving route.

The background art of the present disclosure is disclosed in Korean Patent Application Laid-Open No. 10-2020-0133443 (published on November 30, 2020).

US 2021/109538 A1 discloses restricted area autonomous vehicle control techniques. From WO2018/11136 A1 a method and apparatus for flight planning unmanned aerial vehicles is known. From WO 2022/106894 A1 a safety and critical information logging mechanism for vehicles are known. From US 2018/189516 a method and apparatus to provide privacy from drones using short term memory loss is known. From US 2019 384 320 A1 an autonomous driving control method in a restricted area is known. The method includes: converting a driving mode of a vehicle into a restricted area autonomous driving mode, in which memory access, communication between the vehicle and an external network, and information acquisition are restricted.

### SUMMARY

With the development of autonomous driving technology, unmanned taxis and the like are being proposed as transportation means using an autonomous vehicle. As the number of practically applicable driving scenarios increases, it may be necessary to perform autonomous driving not only on general roads but also on private property or in restricted spaces.

However, when scanning and storing an environment in a digital format in order to perform functions such as autonomous parking and autonomous driving at a restricted motorable space, allowing a visiting autonomous vehicle to store environmental or related information in a digital format without authorization and/or transparent consent may pose security and ethical concerns.

Various embodiments are directed to an autonomous driving apparatus and method at a restricted motorable space, which enable autonomous driving even at a restricted motorable space and restrict or enable the use of information.

In an embodiment, an autonomous driving method at a restricted motorable space in accordance with the present disclosure includes a step in which, before an autonomous vehicle enters a restricted motorable space, a controller of the autonomous vehicle determines whether a privacy mode pilot is allowed; a step in which, when the privacy mode pilot is allowed, the controller perceives a surrounding environment so that autonomous driving is performed at the restricted motorable space; a step in which the controller determines whether storage of data related to the restricted motorable space is allowed; and a step in which, when the storage of the data is allowed, the controller stores the data related to the restricted motorable space.

The step of determining whether the privacy mode pilot is allowed includes a step in which the controller receives a control command on whether the privacy mode pilot is allowed, from an infrastructure device corresponding to the restricted motorable space.

The autonomous driving method includes a step in which the controller receives information on the restricted motorable space from the infrastructure device.

The step of determining whether the privacy mode pilot is allowed includes a step in which the controller determines whether the privacy mode pilot is allowed, according to a tag included in map information and corresponding to the restricted motorable space.

The data related to the restricted motorable space may include sensor data for perceiving the surrounding environment.

The data related to the restricted motorable space may be stored in a protected memory area of the controller.

The data related to the restricted motorable space is encrypted and stored.

In an embodiment, an autonomous driving apparatus at a restricted motorable space in accordance with the present disclosure may include: at least one sensor configured to detect surrounding environment information of an autonomous vehicle; and a controller configured to perform autonomous driving of the vehicle on the basis of the information of the sensor, wherein, before the autonomous vehicle enters a restricted motorable space, the controller determines whether a privacy mode pilot is allowed.

The controller further determines whether storage of data related to the restricted motorable space is allowed, and store the data related to the restricted motorable space when the storage of the data is allowed.

The controller receives a control command on whether the privacy mode pilot is allowed, from an infrastructure device corresponding to the restricted motorable space.

The controller further receives information on the restricted motorable space from the infrastructure device.

The controller determines whether the privacy mode pilot is allowed, according to a tag included in map information and corresponding to the restricted motorable space.

An autonomous driving apparatus and method at a restricted motorable space in accordance with the present disclosure may determine whether a privacy mode pilot is allowed when an autonomous vehicle approaches a restricted motorable space and also control whether storage of related data is allowed, thereby protecting personal information and strengthening security.

### BRIEF DESCRIPTION OF THE DRAWINGS

FIG. 1 is a block diagram illustrating the configuration of an autonomous driving apparatus at a restricted motorable space in accordance with an embodiment of the present disclosure.
FIG. 2 is a flowchart for explaining an autonomous driving method at a restricted motorable space in accordance with an embodiment of the present disclosure.
FIG. 3 and FIG. 4 are exemplary views for explaining autonomous driving at a restricted motorable space in accordance with an embodiment of the present disclosure.
FIG. 5 to FIG. 8 are exemplary views for explaining a perception system of an autonomous driving apparatus at a restricted motorable space in accordance with an embodiment of the present disclosure.

### DETAILED DESCRIPTION OF THE ILLUSTRATED EMBODIMENTS

Hereinafter, an autonomous driving apparatus and method at a restricted motorable space will be described with reference to the accompanying drawings. In this process, the thicknesses of lines or the sizes of elements illustrated in the drawings may be exaggerated for the purpose of clarity and convenience of explanation. Furthermore, terms to be described later are terms defined in consideration of functions thereof in the present disclosure and may be changed according to the intention of a user or an operator, or practice. Accordingly, such terms should be defined based on the disclosure over the present specification.

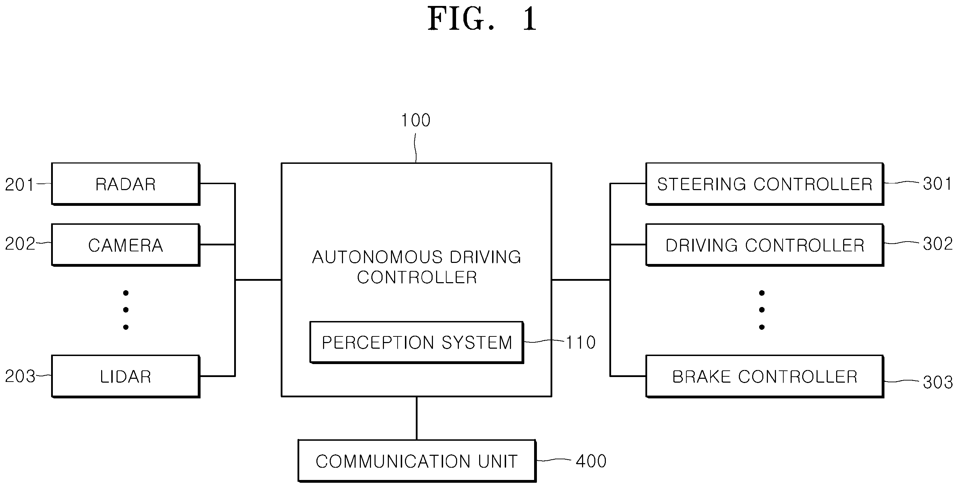

FIG. 1 is a block diagram illustrating the configuration of an autonomous driving apparatus at a restricted motorable space in accordance with an embodiment of the present disclosure.

As illustrated in FIG. 1, the autonomous driving apparatus at a restricted motorable space in accordance with an embodiment of the present disclosure may include sensors including a radar 201, a camera 202, a Lidar 203, and the like, an autonomous driving controller 100, a steering controller 301, a driving controller 302, a brake controller 303, a communication unit 400, and the like.

The sensors such as the radar 201, the camera 202, and the Lidar 203 may detect the surrounding environment and transmit the detected surrounding environment to the autonomous driving controller 100. The autonomous driving controller 100 may perceive the surrounding environment and the like detected by the sensors, perceive a driving situation by using map data and the like stored in the autonomous driving controller 100, and determine a control command for controlling the operation of a vehicle, such as steering, acceleration, and braking, on the basis of the perceived information.

The steering controller 301 may control the operation of a steering device (for example, a steering wheel, a rack bar, a wheel, and the like) of the vehicle under the control of the autonomous driving controller 100, the driving controller 302 may control a power device (for example, an engine, a motor, and the like) of the vehicle under the control of the autonomous driving controller 100, and the brake controller 303 may control a brake device of the vehicle under the control of the autonomous driving controller 100.

The communication unit 400 may have a communication function such as vehicle to everything (V2X) and communicate with surrounding infrastructure devices, driving information providing servers, and the like, and the autonomous driving controller 100 may receive information from the outside through the communication unit 400.

The autonomous driving controller 100 may be provided with a perception system 110, and such a perception system 110 may perceive the surrounding environment, the driving situation, and the like by using the detected surrounding environment and/or map information, and GPS information so that autonomous driving may be performed. To this end, the perception system 110 may store a perception model and the like for integrating and processing related data.

Since the autonomous driving apparatus at a restricted motorable space in accordance with the present disclosure is not limited to such a configuration, it may be implemented in various forms for performing autonomous driving, and some of the above-described configurations may be omitted or an additional configuration may be included. The autonomous driving controller 100 or the perception system 110 may also be mounted in the vehicle, but some functions thereof may be distributed and implemented in the form of a cloud. However, a detailed configuration of the apparatus for performing autonomous driving of the vehicle by detecting the surrounding environment and accordingly controlling the driving of the vehicle may be implemented in various forms, and since it is already obvious to those skilled in the technical field of the present disclosure or may be implemented using an already known system and the like, a more detailed description thereof will be omitted.

As is usual in this field, some exemplary embodiments may be illustrated in the accompanying drawings in terms of functional blocks, units, and/or modules. Those skilled in the art will understand that such blocks, units, and/or modules are physically implemented by electronic (or optical) circuits such as logic circuits, discrete components, processors, hard-wired circuits, memory elements, and wiring connections. When the blocks, units, and/or modules are implemented by a processor or other similar hardware, they may be programmed and controlled using software (for example, codes) in order to perform various functions discussed in the present specification. Each block, unit, and/or module may also be implemented by dedicated hardware, or implemented as a combination of dedicated hardware for performing some functions and a processor (for example, one or more programmed processors and associated circuits) for performing other functions. Each block, unit, and/or module of some exemplary embodiments may also be physically separated into two or more interacting and discrete blocks, units, and/or modules without departing from the concept of the present disclosure. The blocks, units, and/or modules of some exemplary embodiments may also be physically combined into more complex blocks, units, and/or modules without departing from the concept of the present disclosure.

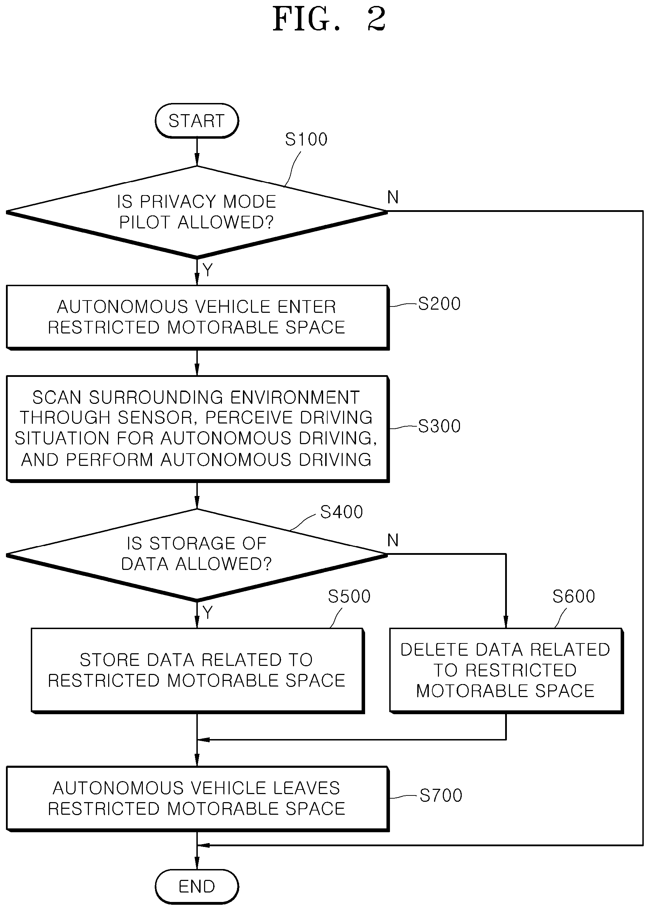

FIG. 2 is a flowchart for explaining an autonomous driving method at a restricted motorable space in accordance with an embodiment of the present disclosure.

As illustrated in FIG. 2, the autonomous driving controller 100 (or the perception system 110, hereinafter, referred to as a controller) determines whether a privacy mode pilot (PMP) is allowed when an autonomous vehicle intends to enter a restricted motorable space (S100).

The restricted motorable space may be, for example, a private vehicle space, a private parking space, a restricted public vehicle space, and a restricted public parking lot, or a combination of one or more of these types.

That is, when it is necessary to enter the restricted motorable space according to a set driving route, the controller may perform autonomous driving by determining whether the privacy mode pilot is allowed, before entering the restricted motorable space.

Whether the privacy mode pilot is allowed is determined by a command regarding whether the privacy mode pilot is allowed, which is transmitted from an infrastructure device installed at an entry and/or exit location of the restricted motorable space through the communication unit 400. The infrastructure device determines whether it is possible to allow a vehicle to enter the restricted motorable space by comparing information (vehicle number and driver information) of the vehicle having approached the restricted motorable space with preset access permission user information.

The infrastructure device additionally transmits information of the restricted motorable space (local map with coordinates (including parking area information, stop areas, movable spaces, routes, and the like)).

Since the infrastructure device may ascertain entry and exit of the autonomous vehicle into/from the restricted motorable space, the infrastructure device may additionally perform operations such as calculating the usage time, settling the fee in the case of parking and the like, and expense settlement according to the passage of the space.

When the infrastructure device installed at the entry and/or exit location of the restricted motorable space is utilized in this way, the access of the autonomous vehicle may be determined by the infrastructure device, so that personal information, confidential information, and the like may be reliably protected.

Whether the privacy mode pilot is allowed is also determined by the controller of an autonomous vehicle according to a tag included in map information and corresponding to the restricted motorable space (that is, information indicating that the current location corresponds to the restricted motorable space or indicating which users may access the restricted motorable space) included in map data (may be commercial map data) used by the autonomous vehicle. For this determination, whether the privacy mode pilot is allowed may be determined by comparing vehicle information with information related to permission to access the corresponding restricted motorable space (for example, allowing only access for a previously set vehicle).

When the privacy mode pilot is allowed (Yes in S100), the autonomous vehicle enters the restricted motorable space under the control of the controller (S200). Subsequently, the controller performs autonomous driving operations such as scanning the surrounding environment through a sensor, perceiving a driving situation for autonomous driving, and performing autonomous driving (S300).

The controller determines whether storage of data related to the restricted motorable space is allowed (S400). That is, the controller may control whether each autonomous vehicle may store the data related to the restricted motorable space (for example, environment scan information of the restricted motorable space, model use and training data for performing autonomous driving, and the like) according to the necessity or setting of a manager of the restricted motorable space for information protection. Whether such information may be stored may be transmitted along with whether the privacy mode pilot is allowed in the above-described step S100.

When the storage of the data is allowed, the controller stores the data related to the restricted motorable space (S500), and when the storage of the data is not allowed, the controller deletes the data related to the restricted motorable space (S600).

Subsequently, when the autonomous vehicle leaves the restricted motorable space, the control related to the privacy mode pilot is terminated (S700).

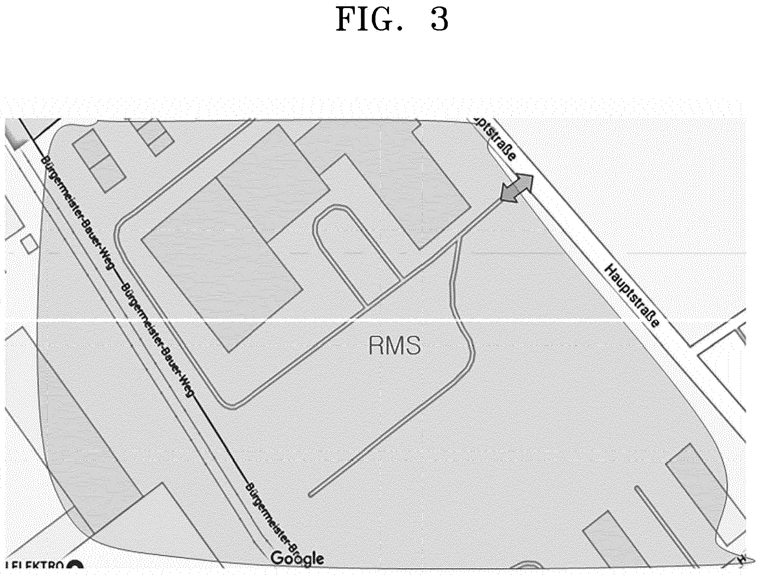

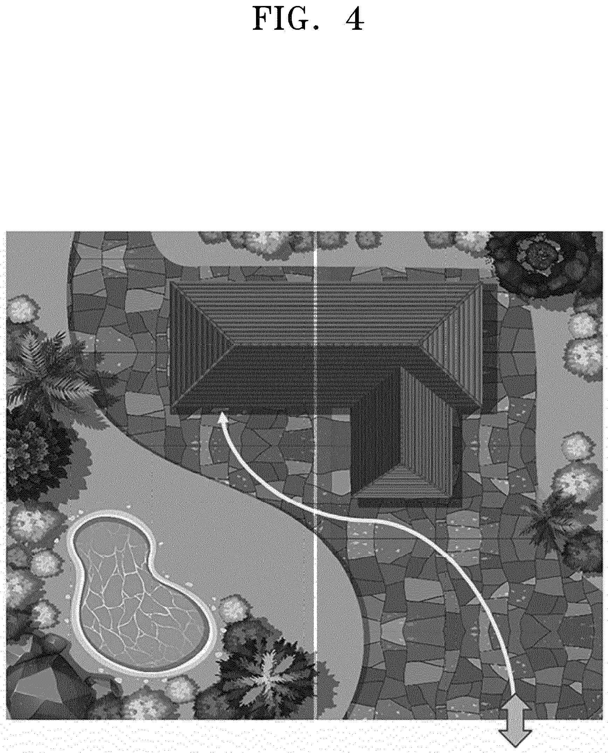

FIG. 3 and FIG. 4 are exemplary views for explaining autonomous driving at a restricted motorable space in accordance with an embodiment of the present disclosure. As illustrated in FIG. 3 and FIG. 4, when an autonomous vehicle enters or exits from a restricted motorable space such as a limited public vehicle space or an individual's house, an operation of the privacy mode pilot may be performed by the above-described infrastructure device or map information. For example, as illustrated in FIG. 4, when an autonomous vehicle enters an individual's house, whether to allow the privacy mode pilot is determined in response to a control command from the owner of the house, and such determination may be transmitted to the autonomous vehicle.

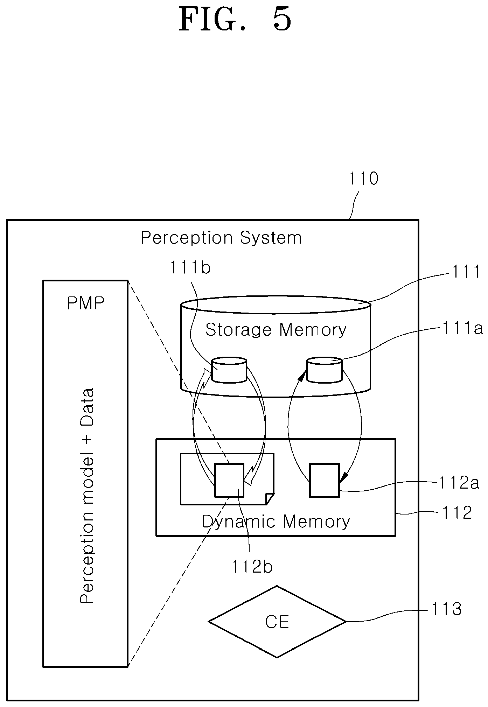

FIG. 5 to FIG. 8 are exemplary views for explaining a perception system of an autonomous driving apparatus at a restricted motorable space in accordance with an embodiment of the present disclosure. For the protection, storage, and the like of the data related to the restricted motorable space described above, the privacy mode pilot needs to be executed in a protected memory area of the autonomous driving controller 100 (or the perception system Perception System 110).

For example, FIG. 5 illustrates a sandbox form, and data 111b related to the privacy mode pilot may be stored in a storage device Storage Memory 111 separately from data 111a for general autonomous driving perception. In such a case, the data stored in the Storage Memory 111 may be a perception model for the privacy mode pilot. The data stored in the Storage Memory 111 may also be encrypted and decrypted when being transmitted to a dynamic memory Dynamic Memory 112.

Even in the Dynamic Memory 112, data 112b related to the privacy mode pilot may be recorded on a protection area separately from data 112a for general autonomous driving perception, and used by a computational element CE 113. The data 112b related to the privacy mode pilot in the Dynamic Memory 112 may further include surrounding environment data scanned from the sensors in addition to a perception model for the privacy mode pilot.

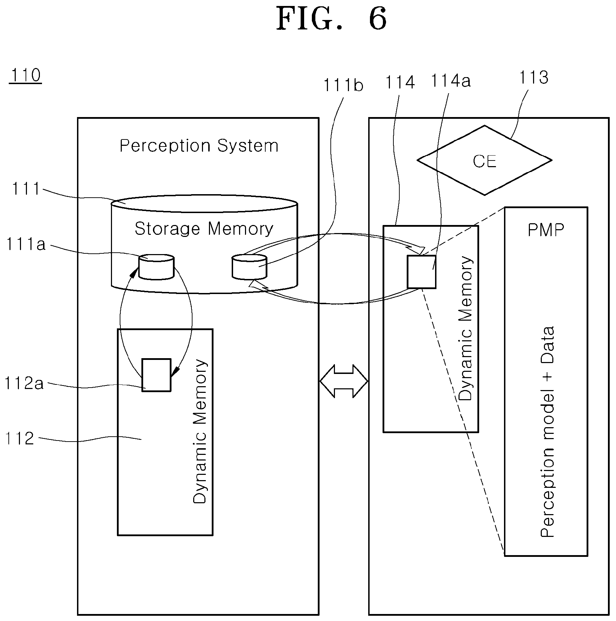

For example, FIG. 6 illustrates a form in which dedicated hardware separately configured to implement the privacy mode pilot in a perception system of a typical autonomous vehicle is connected through a high-speed interface such as PCIe. Data 111b related to the privacy mode pilot may be stored in a storage device Storage Memory 111 of the perception system of the typical autonomous vehicle, but may be stored separately from data 111a for general autonomous driving perception. However, in a dynamic memory Dynamic Memory 114, data 114b related to the privacy mode pilot may be implemented to be used only in dedicated hardware. In such a case, the perception system of the typical autonomous vehicle and the hardware for the privacy mode pilot may exchange sensor data, control signals, and the like.

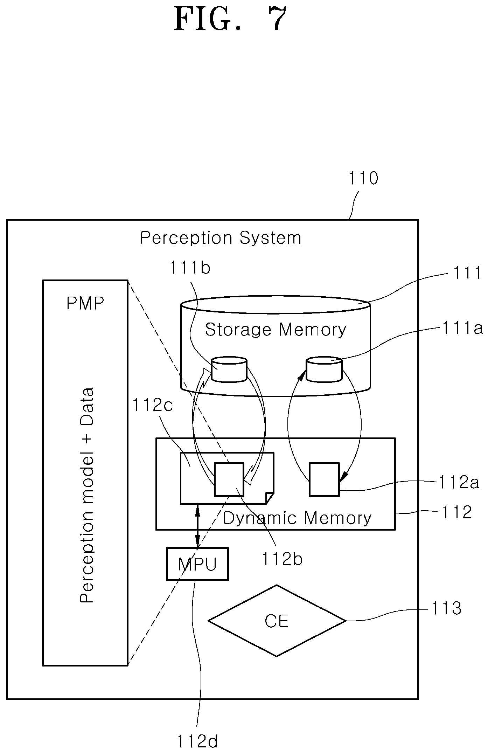

Compared to the configuration of FIG. 5, FIG. 7 further includes a hardware memory protection unit 112d. As such a memory protection unit 112d, a device using an already known method or a commercially available product may be used.

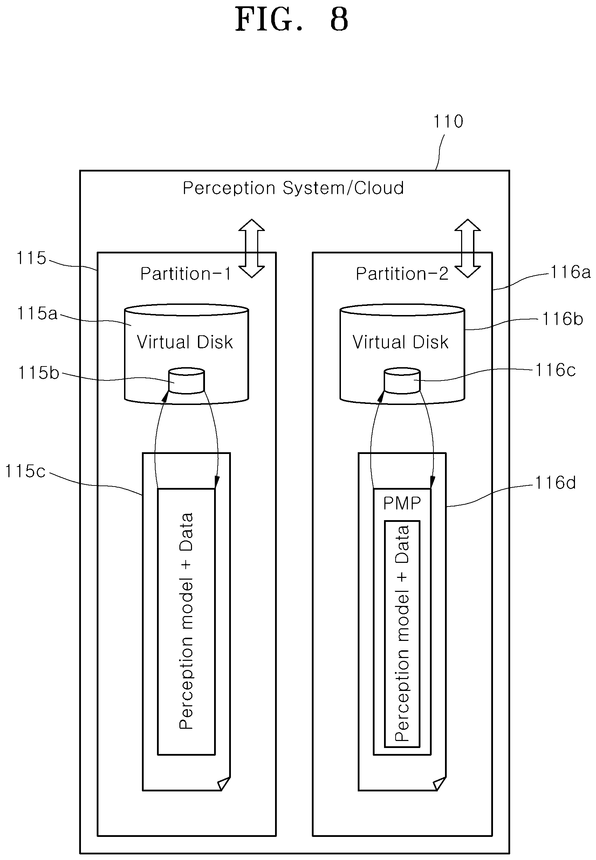

FIG. 8 illustrates a virtualization concept such as a memory partition domain in a hypervisor, in which a data area 116 (Partition-2) for the privacy mode pilot and a data area (Partition-1) 115 for general autonomous driving may be separately configured, a virtual disk Virtual Disk 116a for storing data 116b for the privacy mode pilot may be configured, and a dynamic memory area 116c for this may also be configured to be distinguished from data for general autonomous driving.

As described above, the autonomous driving apparatus and method at a restricted motorable space in accordance with the embodiment of the present disclosure may determine whether the privacy mode pilot is allowed when an autonomous vehicle approaches a restricted motorable space and also control whether storage of related data is allowed, thereby protecting personal information and strengthening security.

Although the present disclosure has been described with reference to the embodiments illustrated in the drawings, the embodiments of the disclosure are for illustrative purposes only, and those skilled in the art will appreciate that various modifications and other equivalent embodiments are possible from the embodiments. Thus, the true technical scope of the present disclosure should be defined by the following claims.

## Claims

1. An autonomous driving method at a restricted motorable space, the autonomous driving method comprising:
a step in which, before an autonomous vehicle enters a restricted motorable space, a controller (100) of the autonomous vehicle determines whether a privacy mode pilot (PMP) is allowed (S100);
a step in which, when the privacy mode pilot (PMP) is allowed, the controller perceives a surrounding environment so that autonomous driving is performed at the restricted motorable space (S200, S300);
a step in which the controller determines whether storage of data related to the restricted motorable space is allowed (S400);
a step in which, when the storage of the data is allowed, the controller stores the data related to the restricted motorable space (S500);
a step in which, when the storage of the data is not allowed, the controller deletes the data related to the restricted motorable space (S600);
and the method being **characterised in that** the step of determining whether the privacy mode pilot (PMP) is allowed comprises:
a step in which the controller receives a control command on whether the privacy mode pilot (PMP) is allowed, from an infrastructure device corresponding to the restricted motorable space;
a step in which the controller receives information on the restricted motorable space from the infrastructure device,
a step in which the infrastructure device determines whether it is possible to allow a vehicle to enter the restricted motorable space by comparing information of the vehicle having approached the restricted motorable space with preset access permission user information.
a step in which the controller determines whether the privacy mode pilot (PMP) is allowed, according to a tag included in map information and corresponding to the restricted motorable space, wherein the data related to the restricted motorable space is encrypted and stored.

2. The autonomous driving method according to claim 1, wherein the data related to the restricted motorable space includes sensor data for perceiving the surrounding environment.

3. The autonomous driving method according to any one of claims 1 to 2, wherein the data related to the restricted motorable space is stored in a protected memory area of the controller.

4. An autonomous driving apparatus at a restricted motorable space, the autonomous driving apparatus comprising:
at least one sensor configured to detect surrounding environment information of an autonomous vehicle; and
a controller configured to perform autonomous driving of the vehicle on the basis of the information of the sensor,
wherein, before the autonomous vehicle enters a restricted motorable space, the controller determines whether a privacy mode pilot (PMP) is allowed wherein the controller further determines whether storage of data related to the restricted motorable space is allowed, and stores the data related to the restricted motorable space when the storage of the data is allowed, when the storage of the data is not allowed, the controller deletes the data related to the restricted motorable space, the autonomous driving apparatus being
**characterised in that** the controller receives a control command on whether the privacy mode pilot (PMP) is allowed, from an infrastructure device corresponding to the restricted motorable space and **in that** the controller further receives information on the restricted motorable space from the infrastructure device, whereby the infrastructure device has determined whether it is possible to allow a vehicle to enter the restricted motorable space by comparing information of the vehicle having approached the restricted motorable space with preset access permission user information, wherein the controller further determines whether the privacy mode pilot (PMP) is allowed, according to a tag included in map information and corresponding to the restricted motorable space, wherein the data related to the restricted motorable space is encrypted and stored.

5. The autonomous driving apparatus according to claim 4, wherein the data related to the restricted motorable space includes sensor data for perceiving the surrounding environment.

6. The autonomous driving apparatus according to any one of claims 4 to 5, wherein the data related to the restricted motorable space is stored in a protected memory area of the controller.

## Patentansprüche

1. Autonomes Fahrverfahren in einem eingeschränkten Fahrraum, wobei das autonome Fahrverfahren Folgendes umfasst:
einen Schritt, in dem, bevor ein autonomes Fahrzeug in einen eingeschränkten Fahrraum einfährt, eine Steuerung (100) des autonomen Fahrzeugs bestimmt, ob ein Datenschutzmoduspilot, PMP, erlaubt ist (S100);
einen Schritt, in dem, wenn der Datenschutzmoduspilot, PMP, erlaubt ist, die Steuerung eine Umgebung erkennt, sodass autonomes Fahren im eingeschränkten Fahrraum durchgeführt wird (S200, S300);
einen Schritt, in dem die Steuerung bestimmt, ob eine Speicherung von Daten mit Bezug auf den eingeschränkten Fahrraum erlaubt ist (S400);
einen Schritt, in dem, wenn die Speicherung der Daten erlaubt ist, die Steuerung die Daten mit Bezug auf den eingeschränkten Fahrraum speichert (S500);
einen Schritt, in dem, wenn die Speicherung der Daten nicht erlaubt ist, die Steuerung die Daten mit Bezug auf den eingeschränkten Fahrraum löscht (S600); und
das Verfahren **dadurch gekennzeichnet ist, dass** der Schritt zum Bestimmen, ob der Datenschutzmoduspilot, PMP, erlaubt ist, Folgendes umfasst:
einen Schritt, in dem die Steuerung einen Steuerbefehl darüber, ob der Datenschutzmoduspilot, PMP, erlaubt ist, von einer Infrastrukturvorrichtung, die dem eingeschränkten Fahrraum zugeordnet ist, empfängt;
einen Schritt, in dem die Steuerung Informationen über den eingeschränkten Fahrraum von der Infrastrukturvorrichtung empfängt;
einen Schritt, in dem die Infrastrukturvorrichtung durch Vergleich von Informationen des sich dem eingeschränkten Fahrraum nähernden Fahrzeugs mit voreingestellten Zugriffsberechtigungsnutzerinformationen bestimmt, ob es möglich ist, einem Fahrzeug zu erlauben, in den eingeschränkten Fahrraum einzufahren;
einen Schritt, in dem die Steuerung anhand eines in Karteninformationen enthaltenen und dem eingeschränkten Fahrraum entsprechenden Tags bestimmt, ob der Datenschutzmoduspilot, PMP, erlaubt ist, wobei die Daten mit Bezug auf den eingeschränkten Fahrraum verschlüsselt und gespeichert sind.

2. Autonomes Fahrverfahren nach Anspruch 1, wobei die Daten mit Bezug auf den eingeschränkten Fahrraum Sensordaten zum Erkennen der Umgebung umfassen.

3. Autonomes Fahrverfahren nach einem der Ansprüche 1 bis 2, wobei die Daten mit Bezug auf den eingeschränkten Fahrraum in einem geschützten Speicherbereich der Steuerung gespeichert sind.

4. Autonome Fahrvorrichtung in einem eingeschränkten Fahrraum, wobei die Vorrichtung Folgendes umfasst:
mindestens einen Sensor, der dazu eingerichtet ist, Umgebungsinformationen eines autonomen Fahrzeugs zu erfassen; und
eine Steuerung, die dazu eingerichtet ist, autonomes Fahren des Fahrzeugs auf der Grundlage der Informationen des Sensors durchzuführen,
wobei, bevor das autonome Fahrzeug in einen eingeschränkten Fahrraum einfährt, die Steuerung bestimmt, ob ein Datenschutzmoduspilot, PMP, erlaubt ist, wobei die Steuerung ferner bestimmt, ob eine Speicherung von Daten mit Bezug auf den eingeschränkten Fahrraum erlaubt ist, und, wenn die Speicherung der Daten erlaubt ist, die Daten mit Bezug auf den eingeschränkten Fahrraum speichert, wobei die Steuerung, wenn die Speicherung der Daten nicht erlaubt ist, die Daten mit Bezug auf den eingeschränkten Fahrraum löscht,
wobei die autonome Fahrvorrichtung **dadurch gekennzeichnet ist, dass** die Steuerung einen Steuerbefehl darüber, ob der Datenschutzmoduspilot, PMP, erlaubt ist, von einer Infrastrukturvorrichtung, die dem eingeschränkten Fahrraum zugeordnet ist, empfängt, und dass die Steuerung ferner Informationen über den eingeschränkten Fahrraum von der Infrastrukturvorrichtung empfängt, wobei die Infrastrukturvorrichtung durch Vergleich von Informationen des sich dem eingeschränkten Fahrraum nähernden Fahrzeugs mit voreingestellten Zugriffsberechtigungsnutzerinformationen bestimmt hat, ob es möglich ist, einem Fahrzeug zu erlauben, in den eingeschränkten Fahrraum einzufahren, wobei die Steuerung ferner anhand eines in Karteninformationen enthaltenen und dem eingeschränkten Fahrraum entsprechenden Tags bestimmt, ob der Datenschutzmoduspilot, PMP, erlaubt ist, wobei die Daten mit Bezug auf den eingeschränkten Fahrraum verschlüsselt und gespeichert sind.

5. Autonome Fahrvorrichtung nach Anspruch 4, wobei die Daten mit Bezug auf den eingeschränkten Fahrraum Sensordaten zum Erkennen der Umgebung umfassen.

6. Autonome Fahrvorrichtung nach einem der Ansprüche 4 bis 5, wobei die Daten mit Bezug auf den eingeschränkten Fahrraum in einem geschützten Speicherbereich der Steuerung gespeichert sind.

## Revendications

1. Procédé de conduite autonome dans un espace carrossable restreint, le procédé de conduite autonome comprenant:
une étape dans laquelle, avant qu'un véhicule autonome n'entre dans un espace carrossable restreint, un contrôleur (100) du véhicule autonome détermine si un pilote en mode confidentialité (PMP) est autorisé (S100);
une étape dans laquelle, lorsque le pilote en mode confidentialité (PMP) est autorisé, le contrôleur perçoit le milieu environnant de manière à ce que la conduite autonome soit effectuée dans l'espace carrossable restreint (S200, S300);
une étape dans laquelle le contrôleur détermine si le stockage des données concernant l'espace carrossable restreint est autorisé (S400);
une étape dans laquelle, lorsque le stockage des données est autorisé, le contrôleur stocke les données relatives à l'espace carrossable restreint (S500);
une étape dans laquelle, lorsque le stockage des données n'est pas autorisé, le contrôleur supprime les données relatives à l'espace carrossable restreint (S600);
et le procédé étant **caractérisé en ce que** l'étape consistant à déterminer si le pilote en mode confidentialité (PMP) est autorisé comprend:
une étape dans laquelle le contrôleur reçoit une instruction de commande indiquant si le pilote en mode confidentialité (PMP) est autorisé, provenant d'un dispositif d'infrastructure correspondant à l'espace carrossable restreint;
une étape dans laquelle le contrôleur reçoit des informations concernant l'espace carrossable restreint provenant du dispositif d'infrastructure,
une étape dans laquelle le dispositif d'infrastructure détermine s'il est possible d'autoriser un véhicule à entrer dans l'espace carrossable restreint en comparant les informations relatives au véhicule qui s'est approché de l'espace carrossable restreint avec les informations prédéfinies relatives à l'utilisateur autorisé à y accéder.
une étape dans laquelle le contrôleur détermine si le pilote en mode confidentialité (PMP) est autorisé, en fonction d'une balise incluse dans les informations cartographiques et correspondant à l'espace carrossable restreint, dans lequel les données relatives à l'espace carrossable restreint sont chiffrées et stockées.

2. Procédé de conduite autonome selon la revendication 1, dans lequel les données associées à l'espace carrossable restreint comprennent des données de capteur permettant de percevoir le milieu environnant.

3. Procédé de conduite autonome selon l'une quelconque des revendications 1 à 2, dans lequel les données relatives à l'espace carrossable restreint sont stockées dans une zone de mémoire protégées du contrôleur.

4. Appareil de conduite autonome dans un espace carrossable restreint, l'appareil de conduite autonome comprenant:
au moins un capteur conçu pour détecter des informations de milieu environnant d'un véhicule autonome; et
un dispositif de commande conçu pour procéder à la conduite autonome du véhicule sur la base des informations du capteur,
dans lequel, avant que le véhicule autonome n'entre dans un espace carrossable restreint, le contrôleur détermine si un pilote en mode confidentialité (PMP) est autorisé, dans lequel le contrôleur détermine en outre si le stockage de données relatives à l'espace carrossable restreint est autorisé, et stocke les données relatives à l'espace carrossable restreint lorsque le stockage des données est autorisé, lorsque le stockage des données n'est pas autorisé, le contrôleur supprime les données relatives à l'espace carrossable restreint, l'appareil de conduite autonome étant **caractérisé en ce que** le contrôleur reçoit une instruction de commande indiquant si le pilote en mode confidentialité (PMP) est autorisé, en provenance d'un dispositif d'infrastructure correspondant à l'espace carrossable restreint, et **en ce que** le contrôleur reçoit en outre des informations sur l'espace carrossable restreint en provenance du dispositif d'infrastructure, ce qui permet aux dispositifs d'infrastructure de déterminer s'il est possible d'autoriser un véhicule à entrer dans l'espace carrossable restreint en comparant les informations du véhicule qui s'est approché de l'espace carrossable restreint avec les informations prédéfinies relatives à l'utilisateur autorisé à y accéder, le contrôleur déterminant en outre si le pilote en mode confidentialité (PMP) est autorisé, en fonction d'une balise incluse dans les informations cartographiques et correspondant à l'espace carrossable restreint, les données relatives à l'espace carrossable restreint étant chiffrées et stockées.

5. Appareil de conduite autonome selon la revendication 4, dans lequel les données associées à l'espace carrossable restreint comprennent des données de capteur permettant de percevoir le milieu environnant.

6. Appareil de conduite autonome selon l'une quelconque des revendications 4 à 5, dans lequel les données associées à l'espace carrossable restreint sont stockées dans une zone de mémoire protégée du contrôleur.
